# EUROPEAN PATENT SPECIFICATION

(11) **EP 4 627 367 B1**
(45) Date of publication and mention of the grant of the patent: **19.08.2026**
(21) Application number: 23814224.4
(22) Date of filing: 01.12.2023
(51) Int. Cl.: H04N 21/84, H04N 21/81, H04N 21/422, H04N 21/45, H04L 65/403, H04L 65/75, H04L 65/70, H04W 4/80, H04W 4/18, G01S 5/14, H04W 4/029, H04W 4/02

(54) **METHOD FOR SYNCHRONOUS AUDIO AND POSITION RECORDING AND STAGE CONTROL SYSTEM**
VERFAHREN ZUR SYNCHRONEN AUDIO- UND POSITIONSAUFZEICHNUNG UND BÜHNENSTEUERUNGSSYSTEM
PROCÉDÉ D'ENREGISTREMENT AUDIO ET DE POSITION SYNCHRONE ET SYSTÈME DE COMMANDE DE SCÈNE

(30) Priority: 02.12.2022 LU 503126
(43) Date of publication of application: 08.10.2025
(73) Proprietor: FBConsulting S.à r.l., 6633 Wasserbillig (LU)
(72) Inventor: BERENS, Friedbert, 6633 Wasserbillig (LU); BERENS, Robin, 6633 Wasserbillig (LU)
(74) Representative: Ipsilon Luxembourg
(86) International application number: PCT/EP2023/084018
(87) International publication number: WO 2024/115780

(56) References cited:
- WO-A1-2006/125849

## Description

### Technical field

The invention lies in the field of audio recording. In particular, the invention relates to stage control systems, wherein it is important to provide an accurate position of an audio source.

### Background of the invention

Real time location and tracking of actors, participants or movable objects on stages or within conference room is a common, yet difficult task. Location tracking is useful on a stage for having a stage light follow a speaker or actor, as they move on that stage. An accurate tracking light provides the audience with increased focus on their audio-visual experience. Traditionally, such tracking spot lights are operated manually for lack of satisfactory technical solutions.

Location tracking of audio sources is also required to generate panoramic, or surround audio mixes. Such a multi-channel audio mix provides the listener with a spatial perception of an audio source. Matching the perceived location to the actual position of an audio source that is played back in the mix requires precise location data, that is accurately synchronized with the corresponding audio signal.

It has been proposed to track objects on a stage using Satellite Navigation Systems such as the Global Positioning System, GPS. Applying such systems in practice is difficult when no direct line-of-sight to the corresponding satellite constellation is available.

Ultra-wideband data communication systems have been recently proposed in multiple areas of technology. Such systems are as such well-known in the art, but their potential fields of application remain expanding. The use of ultra-wideband, UWB, signalling allows for the provision of precise positioning data of objects. In an UWB transmitter, information may be transmitted by generating radio pulses that occupy a large bandwidth at specific time intervals. The information may for example be modulated on UWB pulses by encoding the polarity of the pulse, its amplitude and/or by using orthogonal pulses. UWB pulses can be sent sporadically at relatively low pulse rates to support time or position modulation but can also be sent at rates up to the inverse of the UWB pulse bandwidth. Alternatively, information may be modulated using Orthogonal Frequency Division Multiplexing, OFDM, Fast Frequency Hopping, Frequency-modulated continuous-wave, FMCW, or other known modulation techniques.

An UWB transmission system may further be used to determine the time of flight of a transmitted UWB signal at various frequencies. This helps to overcome multipath propagation, as at least some of the frequencies have a line-of-sight trajectory. Using time of flight methods, distances to objects in the vicinity of an UWB transmitter can be measured to high resolution and accuracy.

Patent document WO2006125849A1 proposes the use of UWB signals to locate actors on a stage. The disclosed system uses one UWB transmitter per tracked actor. This architecture increases the risk of interference if multiple actors, and therefore multiple UWB transmitters, are tracked, in particular if they rapidly change their positions on a stage.

### Technical problem to be solved

It is an objective of the invention to present a method and system, which overcomes at least some of the disadvantages of the prior art.

### Summary of the invention

In accordance with a first aspect of the invention, a method for generating an audio stream tagged with location data at a recording device. The method comprises the steps of:
i) generating audio data by recording, at a recording unit, an audio signal using digital audio recording means;
ii) at the same time, receiving, at the recording unit, ultra-wideband ranging signals from transmitters located in at least three predetermined positions;
iii) computing, at the recording unit, position data of the recording unit relative to said transmitters based on the received ultra-wideband ranging signals, using computing means;
iv) transmitting synchronized audio and position data to a controller unit using ultra-wideband transmission means.

The computing means may preferably comprise a data processor configured by appropriate software code to implement the required functionality. Alternatively, the computing means may be provided by an application specific integrated circuit, for example.

The ultra-wideband receiving and transmission means may preferably comprise an ultra-wideband receiver, transmitter or transceiver device.

The digital audio recording means may preferably comprise a microphone for capturing audio signals in its vicinity, and an operatively coupled memory element for storing a digital representation of the captured audio signal.

The method may preferably comprise the preliminary step of applying a common time reference to a clock of said recording unit and to a clock of said ultra-wideband ranging signal transmitters.

Preferably, the method may comprise a preliminary step of providing position data identifying the locations of said ultra-wideband ranging signal transmitters at said controller unit.

The computation of position data may preferably comprise computing a time difference between the transmission and reception times of the ultra-wideband ranging signals from each of said transmitters.

Preferably, the method may further comprise the steps of
- at said controller unit, receiving said synchronized audio and position data using ultra-wideband receiving means;
- at said controller unit, causing an operatively connected stage device to point towards a location corresponding to said position data.

The stage device may preferably comprise a camera or a light projector.

Preferably, the method may comprise the steps of:
- at said controller unit, providing position data of operatively connected audio speakers and of a listening area;
- at said controller unit, receiving said synchronized audio and position data using ultra-wideband receiving means;
- at said controller unit, based on said position data of operatively connected audio speakers and of a listening area, and based on the received synchronized audio and position data, computing output levels for each of said speakers so as to generate a panoramic audio mix, wherein the panoramic audio mix conveys the position of the recording unit to a subject within the listening area;
- at said controller unit, causing said audio speakers to play back the received audio data using said panoramic audio mix within said listening area.

Preferably, output levels for each of said speakers may be computed so that the generated audio mix reduces the volume of the played back audio data in the vicinity or in the direction of the recording unit.

According to another aspect of the invention, a recording device for generating an audio stream tagged with location is provided. The recording device comprises digital audio recording means, ultra-wideband signal receiving and transmission means, and computing means, wherein the recording device is configured to:
- generate audio data by recording an audio signal using said digital audio recording means;
- receive, at the same time, ultra-wideband ranging signals from transmitters located in at least three predetermined positions;
- compute own position data relative to said transmitters based on the received ultra-wideband ranging signals, using said computing means;
- transmit synchronized audio and position data to a controller unit using said ultra-wideband transmission means.

According to a further aspect of the invention, a controller unit is provided. The controller unit comprises ultra-wideband signal receiving means and computing means, and it is configured to receive synchronized audio and position data from at least one recording device in accordance with aspects of the invention, using said ultrawideband receiving means.

According to yet another aspect of the invention, a recording system is provided. The recording system comprises at least three ultra-wideband transmitters configured to periodically transmit timestamped ranging signals from predetermined positions. The recording system further comprises at least one recording device in accordance with aspects of the invention.

According to another aspect of the invention, a stage control system is provided. the stage control system comprises a recording system according to aspects of the invention, and a controller unit in accordance with aspects of the invention.

Preferably, the stage control system may comprise a stage device operatively connected to said controller unit, wherein the controller unit is further configured to cause the stage device to point towards a location corresponding to the position data received from one of said recording devices.

Preferably, the stage device may comprise a camera or a light projector.

The stage control system may further preferably comprise audio speakers for playing back an audio mix within a listening area, wherein the controller unit is further configured to compute, based on position data of said audio speakers and of said listening area, and based on the synchronized audio and position data received from at least one of said recording devices, output levels for each of said speakers so as to generate a panoramic audio mix, wherein the panoramic audio mix conveys the position of said recording unit to a subject within the listening area, when it is played back using said audio speakers.

In accordance with yet another aspect of the invention, a computer program comprising computer readable code means is provided, which, when run on a computer system, causes the computer system to carry out the method according to aspects of the invention.

In accordance with a final aspect of the invention, a computer program product comprising a computer readable medium on which the computer program according an aspect of the invention is stored.

By using the proposed invention, it becomes possible to generate a digital audio stream, together with location data that precisely matches the location at which the corresponding audio was captured. By using a single Ultra-Wideband, UWB, transceiver at the recording device, which is used for the location estimation and for transmitting the resulting location-tagged audio stream, both the footprint and the energy consumption of the device is kept small. In preferred embodiments, the method may be executed by an appropriately programmed smartphone device, which combines audio recording means as well as an UWB transceiver and the requisite processing power. The proposed method relies on a predetermined number of UWB transmitters that broadcast UWB ranging beacon signals. When tracking actors on a stage, each actor is equipped with an UWB receiver that is able to estimate its own position relative to the UWB transmitters based on a time-of-flight method involving transmission and reception time of the UWB ranging signals. The system is therefore inherently robust to interference as the number of transmitters, i.e., the number of UWB ranging signal emitters, is constant even if multiple recording devices are tracked. Privacy of the estimated location data is managed by the user of the recording device, who is likely the source of the audio data that is recorded. Indeed, the location is computed on the recording device, not on an external device over which the user would have no control. The provision of the resulting audio stream with synchronized location data allows, for example, for the provision of stage control systems that require the precise location of recording device, or actors, moving on a stage. The location data may for example be used to automatically track the person speaking into the audio recording device no a stage using a tracking spot light. Alternatively, the location data may be used to generate a panoramic multi-channel audio mix directed to an audience, wherein the mix conveys in real time the position of the person who is speaking into the audio recording device. Further, the location data may be used to generate an audio mix in which the recorded audio stream's volume is played back at a reduced volume in the vicinity or in the direction of the recording device, in order to avoid audio feedback loops.

### Brief description of the drawings

- Figure 1 shows a workflow indicating the main steps of a method in accordance with a preferred embodiment of the invention;
- Figure 2 shows a schematic illustration of a system and device in accordance with a preferred embodiment of the invention;
- Figure 3 shows a schematic illustration of a system and device in accordance with a preferred embodiment of the invention;
- Figure 4 shows a schematic illustration of a system and device in accordance with a preferred embodiment of the invention.

### Detailed description of the invention

This section describes the invention in further detail based on preferred embodiments and on the figures. Similar reference numbers will be used to describe similar or the same concepts throughout different embodiments of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the disclosed recording is evidently powered by an electric power supply, such as a battery, even though this is not explicitly shown in the figures.

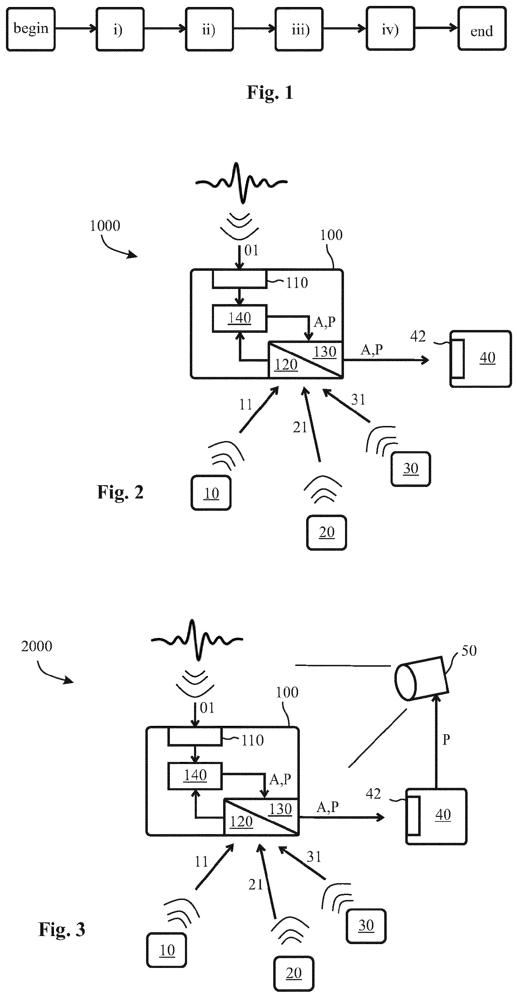

Figure 1 illustrates the main steps of the proposed method for generating an audio stream tagged with location data, in accordance with a preferred embodiment. Figure 2 illustrates a recording unit 100 that is configured for implementing the method steps outlined in figure 1. At step i) the recording unit 100 captures and an audio signal 01 and stores a digital representation thereof - the audio data A - in a non-illustrated memory element of the recording unit. Digital audio recording means 110 such as microphones, sampling and compression methods and modules are as such well-known in the art, and their functioning will not be described in the context of the present invention. Simultaneously, or substantially simultaneously with the recording step, the recording unit 10 receives a set of ultra-wideband, UWB, ranging signals 11, 21, 31 from corresponding UWB transmitters 10, 20, 30 that are located in predetermined positions. The transmitters may for example be installed in the corners of a room, to ensure uniform coverage of the broadcast signals. This corresponds to step ii).

The ranging signals 11, 21, 31 preferably comprise short bursts of signals, with sharp rises and drops, which make the signals' starts and stops inherently easier to measure. This means that the distance between two UWB devices, i.e., the recording unit and each of the transmitters 10, 20, 30 can be measured precisely by measuring the time that it takes for a radio wave to pass between the corresponding two devices. The reception of timestamped beacon signals allows the recording unit 100 to estimate the distance between itself and each of the UWB beacon transmitters 11, 21, 31 using a time-of-flight method. The resulting distances are the position data P which determines the location of the recording unit with respect to the UWB beacon transmitters. This corresponds to method step iii).

By using at least three, but possibly more, such transmitters at known predetermined locations, the recording unit 100 is able to precisely estimate its own relative position with respect to the UWB beacon transmitters. The location of the recording unit 100 substantially corresponds to the location of the source that generated the audio signal 01 that was recorded. A data processor 140 merges the received audio data A and the simultaneously estimated position data P and transmits it towards a control unit 40. This corresponds to step iv) of the proposed method. The control unit may further process the received data, for example by extracting the position data for generating a surround mix.

It should be noted that no external entity has access to the computed position data P, unless the recording unit 100 transmits this position data toward such an external entity. The use of a common UWB transceiver unit 120,130 for position estimation and data transmission requires limited power and provides higher positioning accuracy, compared for example to dedicated GPS receivers for obtaining position data. The UWB transceivers and transmitters may preferably comply with the IEEE802.15.4z standard.

The recording unit 100 may be an integral part of a recording system 1000. The recording system 1000 comprises at least one, but possibly a plurality of similar recording units 100, a receiver unit 40 configured for receiving the synchronised audio and position data A, P from the recording units, and at least three UWB ranging signal transmitters located in known predetermined locations. The beacon transmitters 10, 20 and 30 preferably broadcast timestamped ranging signals to their environment. Interference in the recording system 1000 is limited by the number of transmitters, i.e., beacon transmitters 10, 20, 30, irrespective of the number of recording units 100 using the same beacon signals to estimate their own positions.

Figure 3 illustrates a stage control system 2000 in accordance with a preferred embodiment of the invention. The stage control system 2000 incorporates at least one recording unit 100 as described in the context of figure 2, as well as at least three UWB timestamped beacon transmitters 10, 20, 30 that are positioned in known locations. As previously explained, the ranging signals 11, 21, 31 emitted by these nodes 10, 20 30 are used at the recording unit 100 to estimate its own relative location with respect to the position of these nodes, before tagging a simultaneously recorded digital audio stream A with the corresponding position data P. The synchronized audio and position data A, P is received at a controller unit 40, having an ultra-wideband receiver 42 and non-illustrated data processor. Upon reception of the data stream A, P, the data processor extracts the relative position data P of the recording unit 100, which substantially coincides with the source of the captured audio signal 01. The controller unit 40 is operatively connected to a stage device, such as a camera for capturing video signals of the audio source, or such as a tracking spotlight for shining a light on the source of the audio signal, which may for example be a speaker or an actor on a stage. By way of a non-limiting example, the stage device may preferably be mounted on a tripod having worm-gears that allow its position to be altered by appropriately actioned electrical actuators. Having real-time access to accurate position data P of the audio signal's 10 source, the controller unit 40 is thus able to automatically actuate the stage device's mounting structure to have the stage device point toward the corresponding location. This allows to automatically and accurately track a subject or an object equipped with the recording unit 100 using a spotlight or a camera in real time. The controlling unit 40 may be operatively connected to a plurality of different stage device, and each of said stage devices may be used to track the audio source captured by a different recording unit. The system is thus highly modular and customizable without increasing the UWB interference, which would impact the precision of the estimated position data. In a different embodiment, a plurality of control units 40 may be used simultaneously, wherein a subset of recording units 100 may for example communicate with a given control unit.

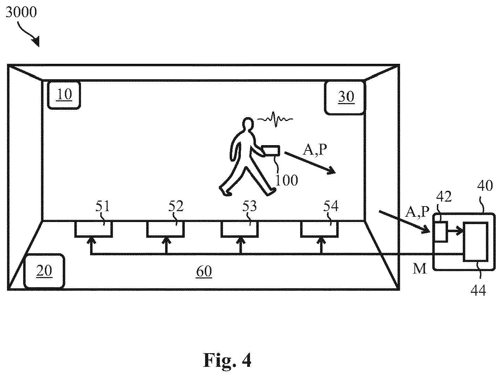

Figure 4 illustrates a stage control system 3000 in accordance with a further preferred embodiment of the invention. The stage control system 2000 uses aspects of the invention as previously described, and applies them to a concept known as panoramic audio mixing, or panning. A simple panning example is given by stereo mixing. Left- and right-channel audio that is mixed at different output volume levels per channel (for example, the left channel may be louder) is perceived by a listener as coming from a virtual source located toward the corresponding direction (toward the left in this example). By using multiple audio channels and multiple speakers at appropriate locations with respect to an audience or listening area, precise virtual positions may be perceived by listeners of a corresponding panoramic audio mix. In the present embodiment of the invention, position data P is used to generate a panoramic audio mix, which makes the audience perceive the virtual sound source (as provided by the audio mix) with the actual location of the sound source. Further, the position date data may be used to generate an audio mix in which the recorded audio stream's volume is played back at a reduced volume in the vicinity or in the direction of the sound source, in order to avoid audio feedback loops.

The stage control system 3000 incorporates at least one recording unit 100 as described in the context of figure 2, as well as at least three UWB timestamped beacon transmitters 10, 20, 30 that are positioned in known locations, for example in the corners of a theatre, as shown on figure 4.

As previously explained, the ranging signals 11, 21, 31 emitted by these nodes 10, 20 30 are used at the recording unit 100 to estimate its own relative location with respect to the position of these nodes, before tagging a simultaneously recorded digital audio stream A with the corresponding position data P. In this example, the recording unit 100 is associated with a person evolving on stage and emitting a sound, which is recorded by the recording unit 100. The synchronized audio and position data A, P is received at a controller unit 40, having an ultra-wideband receiver 42 and a data processor 44. Upon reception of the data stream A, P, the data processor extracts the relative position data P of the recording unit 100, which substantially coincides with the source of the captured audio signal, i.e., the person evolving on the stage.

The theatre is equipped with an audio speaker system. In the non-limiting illustrative example, the system comprises four audio speakers 51, 52, 53, 54 located in known positions. The controller unit 40 is operatively connected to the speaker system. The received audio signal A is fed to each one of the speakers, but the output volume of each of the speaker is different, depending on the position of the speaker 51, 52, 53, 54 and on the position P of the person 100 on stage at the moment of audio recording. The output volume for each speaker 51, 52, 53, 54 is determined by the controller unit, for example by using audio processing software scripts, which generate an audio mix having as many channels as there are speakers, with appropriate volume levels per channel. Alternatively, the control unit may control an audio mixing device and remotely actuate the channel volume faders in accordance with the position P of the recording unit 100. Having access to the position data P, the known positions of the speakers and the location of the listening area 60, the controller unit 40 is configured to generate a corresponding panoramic mix, in which the audio signal A is perceived by a listener within the area 60 as originating at a virtual source, coinciding with the actual position P of the person on stage. In the illustration provided in figure 4, the audio signal A is played back in real-time at each one of the speakers 51, 52, 53 and 54, whereas the volume is determined by the controller unit to be highest for speaker 53, which is closest to the position indicated by the position data P. Second highest volumes are affected to speakers 54 and 52, while speaker 51 will provide the lowest output volume. A listener within the listening area 60 will hear the amplified sound signal A, as coming from the position P on stage due to the panoramic mixing. If multiple recording units 100 are used on the stage, a corresponding panoramic mix is generated by the controlling unit for each one of the recording units, so that the speaker system would able to accurately replicate the location of each captured audio source separately. All the panoramic mixes are then combined and fed together to the speaker system, to generate a sound scene in which the various sound sources are accurately reflected through panoramic mixing.

The embodiment of figure 4 may further be applied if the stage area and listening area 60 coincide. In a conference room setting, potential audio sources are participants, which are each equipped with a recording unit 100. The same participants around the conference table are also potential listeners, depending on who is talking at a given time. Therefore, the stage area, in which audio signals are captured, coincides with the listening area 60. All other aspects explained for the previous embodiment remain the same: a speaker system coupled to the controller unit 30 within the conference room is able to amplify the sound from any person 100 talking around the table in such a way that the corresponding sound A is perceived as coming from the position P of the actual talker.

A skilled person will be enabled by the present description and the accompanying figures to provide a computer program code for implementing the described functionalities without undue burden and without exercising inventive skill.

The scope of protection is defined by the following set of claims.

## Claims

1. A method for generating an audio stream tagged with location data at a recording device, comprising the steps of:
i) generating audio data (A) by recording, at a recording unit (100), an audio signal (01) using digital audio recording means (110);
ii) at the same time, receiving, at the recording unit, ultra-wideband ranging signals (11, 21, 31) from transmitters (10, 20, 30) located in at least three predetermined positions using ultra-wideband receiving means (120);
iii) computing, at the recording unit (100), position data (P) of the recording unit relative to said transmitters (10, 20, 30) based on the received ultra-wideband ranging signals, using computing means (140);
iv) transmitting synchronized audio and position data (A,P) to a controller unit using ultra-wideband transmission means (130).

2. The method according to claim 1, comprising the preliminary step of applying a common time reference to a clock of said recording unit (100) and a clock of said ultra-wideband ranging signal transmitters (10, 20, 30).

3. The method according to any of the previous claims, comprising the preliminary step of providing position data identifying the locations of said ultra-wideband ranging signal transmitters (10, 20, 30) at said controller unit (40).

4. The method according to any of the previous claims, wherein said computation of position data (P) comprises computing a time difference between the transmission and reception times of the ultra-wideband ranging signals (11, 21, 31) from each of said transmitters (10, 20, 30).

5. The method according to any of the previous claims, further comprising the steps of
- at said controller unit (40), receiving said synchronized audio and position data (A,P) using ultra-wideband receiving means (42);
- at said controller unit (40), causing an operatively connected stage device (50), preferably comprising a camera or a light projector, to point towards a location corresponding to said position data.

6. The method according to any of claims 1 to 4, further comprising the steps of:
- at said controller unit (40), providing position data of operatively connected audio speakers (51, 52, 52, 54) and of a listening area (60);
- at said controller unit, receiving said synchronized audio and position data (A,P) using ultra-wideband receiving means (42);
- at said controller unit, based on said position data of operatively connected audio speakers and of a listening area, and based on the received synchronized audio and position data, computing output levels for each of said speakers (51, 52, 53, 54) so as to generate a panoramic audio mix (M), wherein the panoramic audio mix conveys the position (P) of the recording unit (100) to a subject within the listening area (60);
- at said controller unit (40), causing said audio speakers (51, 52, 53, 54) to play back the received audio data (A) using said panoramic audio mix (M) within said listening area (60).

7. The method according to claim 6, wherein said output levels for each of said speakers are computed so that the generated audio mix reduces the volume of the played back audio data in the vicinity or in the direction of the recording unit.

8. A recording device (100) for generating an audio stream tagged with location data, comprising digital audio recording means (110), ultra-wideband signal receiving (120) and transmission (130) means, and computing means (140), wherein the recording device is configured to:
- generate audio data by recording an audio signal (01) using said digital audio recording means (110);
- receive, at the same time, ultra-wideband ranging signals (11, 21, 31) from transmitters (10, 20, 30) located in at least three predetermined positions;
- compute own position data (P) relative to said transmitters (10, 20, 30) based on the received ultra-wideband ranging signals, using said computing means (140);
- transmit synchronized audio and position data (A, P) to a controller unit (40) using said ultra-wideband transmission means (130).

9. A controller unit (40) comprising ultra-wideband signal receiving means (42) and computing means (44), wherein the controller unit is configured to receive synchronized audio and position data (A,P) from at least one recording device (100) in accordance with claim 8, using said ultrawideband receiving means.

10. A recording system (1000) comprising at least three ultra-wideband transmitters (10, 20, 30) configured to periodically transmit timestamped ranging signals (11, 21, 31) from predetermined positions, wherein the recording system further comprises at least one recording device (100) in accordance with claim 8.

11. A stage control system (2000, 3000) comprising a recording system according to claim 8, and a controller unit (40) in accordance with claim 9.

12. The stage control system (2000, 3000) according to claim 11, further comprising a stage device (50) which preferably comprises a camera or a light projector, operatively connected to said controller unit (40), wherein the controller unit is further configured to cause the stage device (50) to point towards a location corresponding to the position data (P) received from one of said recording devices (100).

13. The stage control system (3000) according to any of claims 11 or 12, further comprising audio speakers (51, 52, 53, 54) for playing back an audio mix (M) within a listening area (60), wherein the controller unit (40) is further configured to compute, based on position data of said audio speakers and of said listening area, and based on the synchronized audio and position data (A,P) received from at least one of said recording devices (100), output levels for each of said speakers (51, 52, 53, 54) so as to generate a panoramic audio mix (M), wherein the panoramic audio mix conveys the position (P) of said recording unit (100) to a subject within the listening area (60), when it is played back using said audio speakers.

14. A computer program comprising computer readable code means, which, when run on a computer system, causes the computer system to carry out the method according to claim 1.

15. A computer program product comprising a computer readable medium on which the computer program according to claim 14 is stored.

## Patentansprüche

1. Verfahren zum Erzeugen eines mit Ortsdaten getaggten Audiostreams an einem Aufzeichnungsgerät, umfassend die Schritte:
i) Erzeugen von Audiodaten (A) durch Aufzeichnen eines Audiosignals (01) an einer
Aufzeichnungseinheit (100) mittels digitaler Audioaufzeichnungsmittel (110);
ii) gleichzeitiges Empfangen von Ultrawideband-Entfernungssignalen (11, 21, 31) von Sendegeräten (10, 20, 30), die sich an mindestens drei vorbestimmten Positionen befinden, an der Aufzeichnungseinheit unter Verwendung von Ultrawideband-Empfangsmitteln (120);
iii) Berechnen von Positionsdaten (P) der Aufzeichnungseinheit (100) relativ zu den Sendegeräten (10, 20, 30) an der Aufzeichnungseinheit (100) auf der Grundlage der empfangenen Ultrawideband-Entfernungssignale mittels einer Recheneinheit (140);
iv) Übertragen von synchronisierten Audio- und Positionsdaten (A, P) an eine Steuereinheit mittels Ultrawideband-Übertragungsmitteln (130).

2. Verfahren nach Anspruch 1, umfassend den vorbereitenden schritt des Anlegens einer gemeinsamen Zeitreferenz an eine Uhr der Aufzeichnungseinheit (100) und eine Uhr der Ultrawideband-Entfernungssignal-Sendegeräte (10, 20, 30).

3. Verfahren nach einem der vorhergehenden Ansprüche, umfassend den vorbereitenden schritt des Bereitstellens von Positionsdaten, die die orten der Ultrawideband-Entfernungssignal-Sendegeräte (10, 20, 30) an der Steuereinheit (40) identifizieren.

4. Verfahren nach einem der vorhergehenden Ansprüche, wobei das Berechnen der Positionsdaten (P) das Berechnen einer Zeitdifferenz zwischen den sende- und Empfangszeiten der Ultrawideband-Entfernungssignale (11, 21, 31) von jedem der Sendegeräte (10, 20, 30) umfasst.

5. Verfahren nach einem der vorhergehenden Ansprüche, ferner umfassend die Schritte:
- Empfangen der synchronisierten Audio- und Positionsdaten (A, P) an der Steuereinheit (40) mittels Ultrawideband-Empfangsmittel (42);
- Veranlassen eines betriebsmäßig verbundenen Bühnengeräts (50) an der Steuereinheit (40), vorzugsweise umfassend eine Kamera oder einen Lichtprojektor, in Richtung eines einem den Positionsdaten entsprechenden Orts zu zeigen.

6. Verfahren nach einem der Ansprüche 1 bis 4, ferner umfassend die Schritte:
- Bereitstellen von Positionsdaten betriebsmäßig verbundener Lautsprecher (51, 52, 52, 54) und eines Hörbereichs (60) an der Steuereinheit (40);
- Empfangen der synchronisierten audio- und Positionsdaten (A, P) an der Steuereinheit mithilfe von Ultrawideband-Empfangsmitteln (42);
- Berechnen von Ausgangspegeln für jeden der Lautsprecher (51, 52, 53, 54) an der Steuereinheit (40) auf der Grundlage der Positionsdaten der betriebsmäßig verbundenen Lautsprecher und des Hörbereichs sowie auf der Grundlage der empfangenen synchronisierten Audio- und Positionsdaten, um einen panoramischen Audiomix (M) zu erzeugen, wobei der panoramische Audiomix die Position (P) der Aufzeichnungseinheit (100) einem Subjekt innerhalb des Hörbereichs (60) vermittelt;
- Veranlassen der Lautsprecher (51, 52, 53, 54) an der Steuereinheit (40), die empfangenen Audiodaten (A) unter Verwendung des panoramischen Audiomix (M) innerhalb des Hörbereichs (60) wiederzugeben.

7. Verfahren nach Anspruch 6, wobei die Ausgangspegel für jeden der Lautsprecher so berechnet werden, dass der erzeugte Audiomix die Lautstärke der wiedergegebenen Audiodaten in der Nähe oder in Richtung der Aufzeichnungseinheit reduziert.

8. Aufzeichnungsgerät (100) zum Erzeugen eines mit Ortsdaten getaggten Audiostreams, umfassend digitale Audioaufzeichnungsmittel (110), Ultrawideband-Signalempfangsmittel (120) und Übertragungsmittel (130) sowie eine Recheneinheit (140), wobei das Aufzeichnungsgerät so konfiguriert ist, dass es:
- Audiodaten durch Aufzeichnen eines Audiosignals (01) mittels der digitalen Audioaufzeichnungsmittel (110) erzeugt;
- gleichzeitig Ultrawideband-Entfernungssignale (11, 21, 31) von Sendegeräten (10, 20, 30) empfängt, die sich an mindestens drei vorbestimmten Positionen befinden;
- eigene Positionsdaten (P) relativ zu den Sendegeräten (10, 20, 30) auf der Grundlage der empfangenen Ultrawideband-Entfernungssignale mittels der Recheneinheit (140) berechnet;
- synchronisierte Audio- und Positionsdaten (A, P) mithilfe der Ultrawideband-Übertragungsmittel (130) an eine Steuereinheit (40) überträgt.

9. Steuereinheit (40), umfassend Ultrawideband-Signalempfangsmittel (42) und eine Recheneinheit (44), wobei die Steuereinheit so konfiguriert ist, dass sie mithilfe der Ultrawideband-Empfangsmittel synchronisierte Audio- und Positionsdaten (A, P) von mindestens einem aufzeichnungsgerät (100) gemäß Anspruch 8 empfängt.

10. Aufzeichnungssystem (1000), umfassend mindestens drei Ultrawideband-Sender (10, 20, 30), die so konfiguriert sind, dass sie von vorbestimmten Positionen aus periodisch mit Zeitstempeln versehene Entfernungssignale (11, 21, 31) aussenden, wobei das Aufzeichnungssystem ferner mindestens ein Aufzeichnungsgerät (100) gemäß Anspruch 8 umfasst.

11. Bühnensteuerungssystem (2000, 3000), umfassend ein Aufzeichnungssystem gemäß Anspruch 8 und eine Steuereinheit (40) gemäß Anspruch 9.

12. Bühnensteuerungssystem (2000, 3000) nach Anspruch 11, ferner umfassend ein Bühnengerät (50), das vorzugsweise eine Kamera oder einen Lichtprojektor umfasst und betriebsmäßig mit der Steuereinheit (40) verbunden ist, wobei die Steuereinheit ferner so konfiguriert ist, dass sie das Bühnengerät (50) veranlasst, in Richtung eines einem den Positionsdaten (P) entsprechenden Orts zu zeigen, die von einem der Aufzeichnungsgeräte (100) empfangen werden.

13. Bühnensteuerungssystem (3000) nach einem der Ansprüche 11 oder 12, ferner umfassend Lautsprecher (51, 52, 53, 54) zum Wiedergeben eines Audiomix (M) innerhalb eines Hörbereichs (60), wobei die Steuereinheit (40) ferner so konfiguriert ist, dass sie auf der Grundlage von Positionsdaten der Lautsprecher und des Hörbereichs sowie auf der Grundlage der synchronisierten Audio- und Positionsdaten (A, P), die von mindestens einem der Aufzeichnungsgeräte (100) empfangen werden, Ausgangspegel für jeden der Lautsprecher (51, 52, 53, 54) berechnet, um einen panoramischen Audiomix (M) zu erzeugen, wobei der panoramische Audiomix die Position (P) der Aufzeichnungseinheit (100) einem Subjekt innerhalb des Hörbereichs (60) vermittelt, wenn er mithilfe der Lautsprecher wiedergegeben wird.

14. Computerprogramm, umfassend computerlesbare Codemittel, die, wenn sie auf einem Computersystem ausgeführt werden, das Computersystem veranlassen, das Verfahren nach Anspruch 1 auszuführen.

15. Computerprogrammprodukt, umfassend ein computerlesbares Medium, auf dem das Computerprogramm nach Anspruch 14 gespeichert ist.

## Revendications

1. Procédé de génération, à un dispositif d'enregistrement, d'un flux audio marqué par des données de position, comprenant les étapes consistant à :
i) générer des données audio (A) par enregistrement, au niveau d'une unité d'enregistrement (100), d'un signal audio (01) à l'aide de moyens d'enregistrement audio numériques (110) ;
ii) en même temps, recevoir, au niveau de l'unité d'enregistrement, des signaux de télémétrie ultra-large bande (11, 21, 31) provenant d'émetteurs (10, 20, 30) situés en au moins trois positions prédéterminées, à l'aide de moyens de réception ultra-large bande (120) ;
iii) calculer, au niveau de l'unité d'enregistrement (100), des données de position (P) de l'unité d'enregistrement par rapport auxdits émetteurs (10, 20, 30) sur la base des signaux de télémétrie ultra-large bande reçus, au moyen de moyens de calcul (140);
iv) transmettre des données audio et de position synchronisées (A, P) à une unité de commande à l'aide de moyens de transmission ultra-large bande (130).

2. Procédé selon la revendication 1, comprenant l'étape préliminaire consistant à appliquer une référence temporelle commune à une horloge de ladite unité d'enregistrement (100) et à une horloge desdits émetteurs (10, 20, 30) de signaux de télémétrie ultra-large bande.

3. Procédé selon l'une quelconque des revendications précédentes, comprenant l'étape préliminaire consistant à fournir, à ladite unité de commande (40), des données de position identifiant les emplacements desdits émetteurs (10, 20, 30) de signaux de télémétrie ultra-large bande.

4. Procédé selon l'une quelconque des revendications précédentes, dans lequel ledit calcul des données de position (P) comprend le calcul d'une différence de temps entre les instants de transmission et de réception des signaux de télémétrie ultra-large bande (11, 21, 31) provenant de chacun desdits émetteurs (10, 20, 30).

5. Procédé selon l'une quelconque des revendications précédentes, comprenant en outre les étapes consistant à :
- au niveau de ladite unité de commande (40), recevoir lesdites données audio et de position synchronisées (A, P) à l'aide de moyens de réception ultra-large bande (42);
- au niveau de ladite unité de commande (40), amener un dispositif de scène (50) connecté de manière opérationnelle, comprenant de préférence une caméra ou un projecteur de lumière, à pointer vers un emplacement correspondant auxdites données de position.

6. Procédé selon l'une quelconque des revendications 1 à 4, comprenant en outre les étapes consistant à :
- au niveau de ladite unité de commande (40), fournir des données de position de haut-parleurs audio (51, 52, 52, 54) connectés de manière opérationnelle et d'une zone d'écoute (60) ;
- au niveau de ladite unité de commande (40), recevoir lesdites données audio et de position synchronisées (A, P) à l'aide de moyens de réception ultra-large bande (42);
- au niveau de ladite unité de commande (40), sur la base desdites données de position des haut-parleurs audio connectés de manière opérationnelle et de ladite zone d'écoute, et sur la base desdites données audio et de position synchronisées reçues, calculer des niveaux de sortie pour chacun desdits haut-parleurs (51, 52, 53, 54) de manière à générer un mixage audio panoramique (M), le mixage audio panoramique véhiculant la position (P) de l'unité d'enregistrement (100) à un sujet situé dans ladite zone d'écoute (60) ;
- au niveau de ladite unité de commande (40), amener lesdits haut-parleurs audio (51, 52, 53, 54) à reproduire lesdites données audio reçues (A) à l'aide dudit mixage audio panoramique (M) au sein de ladite zone d'écoute (60).

7. Procédé selon la revendication 6, dans lequel lesdits niveaux de sortie pour chacun desdits haut-parleurs sont calculés de sorte que le mixage audio généré réduise le volume des données audio reproduites à proximité ou en direction de l'unité d'enregistrement.

8. Dispositif d'enregistrement (100) pour générer un flux audio marqué par des données de position, comprenant des moyens d'enregistrement audio numériques (110), des moyens de réception (120) et de transmission (130) de signaux ultra-large bande, et des moyens de calcul (140), le dispositif d'enregistrement étant configuré pour:
- générer des données audio par enregistrement d'un signal audio (01) à l'aide desdits moyens d'enregistrement audio numériques (110);
- recevoir, en même temps, des signaux de télémétrie ultra-large bande (11, 21, 31) provenant d'émetteurs (10, 20, 30) situés en au moins trois positions prédéterminées;
- calculer ses propres données de position (P) par rapport auxdits émetteurs (10, 20, 30) sur la base des signaux de télémétrie ultra-large bande reçus, à l'aide desdits moyens de calcul (140);
- transmettre des données audio et de position synchronisées (A, P) à une unité de commande (40) à l'aide desdits moyens de transmission ultra-large bande (130).

9. Unité de commande (40) comprenant des moyens de réception de signaux ultra-large bande (42) et des moyens de calcul (44), l'unité de commande étant configurée pour recevoir des données audio et de position synchronisées (A, P) provenant d'au moins un dispositif d'enregistrement (100) selon la revendication 8, à l'aide desdits moyens de réception ultra-large bande.

10. Système d'enregistrement (1000) comprenant au moins trois émetteurs ultra-large bande (10, 20, 30) configurés pour transmettre périodiquement des signaux de télémétrie horodatés (11, 21, 31) à partir de positions prédéterminées, le système d'enregistrement comprenant en outre au moins un dispositif d'enregistrement (100) selon la revendication 8.

11. Système de commande de scène (2000, 3000) comprenant un système d'enregistrement selon la revendication 10, et une unité de commande (40) selon la revendication 9.

12. Système de commande de scène (2000, 3000) selon la revendication 11, comprenant en outre un dispositif de scène (50) qui comprend de préférence une caméra ou un projecteur de lumière, connecté de manière opérationnelle à ladite unité de commande (40), l'unité de commande étant en outre configurée pour amener le dispositif de scène (50) à pointer vers un emplacement correspondant aux données de position (P) reçues en provenance de l'un desdits dispositifs d'enregistrement (100).

13. Système de commande de scène (3000) selon l'une quelconque des revendications 11 ou 12, comprenant en outre des haut-parleurs audio (51, 52, 53, 54) destinés à reproduire un mixage audio (M) au sein d'une zone d'écoute (60), l'unité de commande (40) étant en outre configurée pour calculer, sur la base de données de position desdits haut-parleurs audio et de ladite zone d'écoute, et sur la base des données audio et de position synchronisées (A, P) reçues en provenance d'au moins l'un desdits dispositifs d'enregistrement (100), des niveaux de sortie pour chacun desdits haut-parleurs (51, 52, 53, 54) de manière à générer un mixage audio panoramique (M), le mixage audio panoramique véhiculant la position (P) de ladite unité d'enregistrement (100) à un sujet situé dans ladite zone d'écoute (60) lorsqu'il est reproduit à l'aide desdits haut-parleurs audio.

14. Programme d'ordinateur comprenant des moyens de code lisibles par ordinateur qui, lorsqu'ils sont exécutés sur un système informatique, amènent le système informatique à mettre en œuvre le procédé selon la revendication 1.

15. Produit programme d'ordinateur comprenant un support lisible par ordinateur sur lequel est stocké le programme d'ordinateur selon la revendication 14.
